# EUROPEAN PATENT SPECIFICATION

(11) **EP 4 209 803 B1**
(45) Date of publication and mention of the grant of the patent: **18.03.2026**
(21) Application number: 21954412.9
(22) Date of filing: 14.12.2021
(51) Int. Cl.: G01S 7/4861, G01S 7/486, G01S 7/487, G01S 17/10

(54) **METHOD AND DEVICE FOR IMPROVING LASER RANGING CAPABILITY OF RADAR SYSTEM AND STORAGE MEDIUM**
VERFAHREN UND VORRICHTUNG ZUR VERBESSERUNG DER LASERENTFERNUNGSMESSUNGSFÄHIGKEIT EINES RADARSYSTEMS UND SPEICHERMEDIUM
PROCÉDÉ ET DISPOSITIF D'AMÉLIORATION DE CAPACITÉ TÉLÉMÉTRIQUE LASER DE SYSTÈME RADAR ET SUPPORT DE STOCKAGE

(30) Priority: 23.11.2021 CN 202111397377
(43) Date of publication of application: 12.07.2023
(73) Proprietor: Suteng Innovation Technology Co., Ltd, Shenzhen City Guangdong 518000 (CN)
(72) Inventor: JIANG, Shen, Shenzhen City Guangdong 518000 (CN); TAN, Bin, Shenzhen City Guangdong 518000 (CN)
(74) Representative: Ran, Handong
(86) International application number: PCT/CN2021/137986
(87) International publication number: WO 2023/092722

(56) References cited:
- CN-A- 113 534 107
- US-A1- 2010 060 562
- US-A1- 2018 284 245
- US-A1- 2019 250 257
- US-A1- 2019 310 368
- US-A1- 2021 294 180
- US-A1- 2021 311 174
- US-A1- 2021 311 174
- GUO, ZHICHAO: "Research and Implementation of Direct Wave Suppression Technology for Co-location HF FMCW Radar", MASTER'S THESIS, 1 June 2019 (2019-06-01), CN, pages 1 - 72, XP009546069, DOI: 10.27061/d.cnki.ghgdu.2019.005316
- LI, NAN: "Theoretical Modeling and Experimental Study of Noise of a Lidar Optical Receiver", MASTER'S THESIS, 1 January 2016 (2016-01-01), CN, pages 1 - 61, XP009546070
- JIA, FANGXIU: "Research on Key Technologies of Phase-shift Laser Range Finder with Multi-frequency Modulation", DOCTORAL DISSERTATION, 1 March 2010 (2010-03-01), CN, pages 1 - 153, XP009546081

## Description

### TECHNICAL FIELD

The present application relates to the field of measurement, and in particular to a method and apparatus for improving the laser beam ranging capability of a LiDAR system and a storage medium.

### BACKGROUND

In recent years, autonomous vehicle with LiDAR is in a vigorous development period. A sensor arranged at a receiving end of the LiDAR system in the related art can adopt a single photon avalanche diode (SPAD) with relatively high photoelectric detection capability, but the high-gain characteristic of the SPAD may cause the SPAD to be particularly sensitive to ambient light and thus easily influenced by the ambient light.

When external ambient light becomes strong, the SPAD can continuously excite more micro units to work, such that the average working current increases. In this way, the internal temperature rise of the LiDAR system correspondingly increases when heat dissipation conditions are constant, and the target detection failure may be caused due to the fact that the SPAD fails in a high-temperature environment or outputs abnormal waveforms. Therefore, how to identify glare noise so as to reduce the effect of glare is an urgent technical problem to be solved in the art.
US2021/311174A1 discloses a LiDAR receiving apparatus, a LiDAR system, a laser ranging method, a laser ranging controller and a computer readable storage medium. The lidar receiving apparatus includes a photodetector, which is configured to receive a reflected laser signal and to convert the reflected laser signal into a current signal when a bias voltage of the photodetector is greater than a breakdown voltage of the same; a ranging circuit, which is connected with the photodetector and configured to calculate distance data according to the current signal; and a power control circuit, which is connected with the photodetector and configured to control the bias voltage applied to the photodetector according to a predefined rule, wherein the predefined rule includes: at a receiving time of a stray reflected signal, the bias voltage of the photodetector is smaller than the breakdown voltage; and the receiving time of the stray reflected signal is a time at which a transmitted laser signal reaches the photodetector through a stray light path other than a ranging light path.
US2010/060562A1 discloses a method to compensate for stray light in a light sensor. The light sensor includes a detection photosensor and a reference photosensor, the reference photosensor being for use in compensating for stray light falling on the detection photosensor. The method comprises using the reference photosensor at least in part to determine a bias voltage applied to the detection photosensor. Based on this method, a display device is provided comprising a backlight and a light sensor for determining an ambient light level with the effects of stray light from the backlight substantially removed, with means provided for controlling the intensity of the backlight in dependence upon the determined ambient light level.

### SUMMARY

The embodiments of the present application provide a method and apparatus for improving laser beam ranging capability of a LiDAR system and a storage medium. The invention is set out in the appended set of claims.

In a first aspect, an embodiment of the present application provides a method for improving laser beam ranging capability of a LiDAR system according to claim 1.

In a second aspect, an embodiment of the present application provides an apparatus for improving laser beam ranging capability of a LiDAR system according to claim 5.

In a third aspect, an embodiment of the present application provides a computer-readable storage medium according to claim 6.

The beneficial effects brought by the technical solutions provided in some embodiments of the present application at least include the followings.

In the embodiment of the present application, a first current signal output by a receiving sensor and a second current signal output by a reference sensor can be acquired; a cancellation residue is determined based on the first current signal and the second current signal; whether glare noise exists in echo light is determined based on the cancellation residue; and a bias voltage at a receiving end of the LiDAR system is adjusted in a case that the glare noise exists in the echo light. Therefore, in the embodiment of the present application, whether glare noise exists in the echo light can be detected by arranging the receiving sensor and the reference sensor at the receiving end of the LiDAR system, and if yes, the bias voltage at the receiving end is reduced to reduce the average current of the receiving sensor and reduce noise excitation, so that the accuracy of the ranging capability of the LiDAR system is improved.

### BRIEF DESCRIPTION OF THE DRAWINGS

FIG. 1 is an application scenario diagram of a method for improving the laser beam ranging capability of a LiDAR system according to an embodiment of the present application;
FIG. 2a is a structural block diagram of a LiDAR receiving apparatus according to an embodiment of the present application;
FIG. 2b is a schematic diagram of a waveform at a pulse laser beam receiving end of a LiDAR system under normal ambient light conditions according to an embodiment of the present application;
FIG. 2c is a schematic diagram of an implementation of a transimpedance amplifier circuit according to an embodiment of the present application;
FIG. 2d is a schematic diagram of an implementation of another transimpedance amplifier circuit according to an embodiment of the present application;
FIG. 3 is a schematic diagram of a waveform at a pulse laser beam receiving end of a LiDAR system under a glare irradiation condition according to an embodiment of the present application;
FIG. 4 is a schematic flowchart of a method for improving the laser beam ranging capability of a LiDAR system according to an embodiment of the present application;
FIG. 5 is a schematic diagram of a waveform when a preset bias control signal is applied to a receiving sensor and a reference sensor in a LiDAR system according to an embodiment of the present application;
FIG. 6 is a schematic flowchart of another method for improving the laser beam ranging capability of a LiDAR system according to an embodiment of the present application;
FIG. 7 is a waveform diagram of echo light received by a receiving sensor at a receiving end according to an embodiment of the present application;
FIG. 8 is a schematic flowchart of another method for improving the laser beam ranging capability of a LiDAR system according to an embodiment of the present application;
FIG. 9 is another waveform diagram of echo light received by a receiving sensor at a receiving end according to an embodiment of the present application;
FIG. 10 is a schematic flowchart of yet another method for improving the laser beam ranging capability of a LiDAR system according to an embodiment of the present application;
FIG. 11 is a schematic structural diagram of an apparatus for improving laser beam ranging capability of a LiDAR system according to an embodiment of the present application;
FIG. 12 is a schematic diagram of circuits in an adjusting module according to an embodiment of the present application;
FIG. 13 is a schematic diagram of circuits in another adjusting module according to an embodiment of the present application;
FIG. 14 is a schematic diagram of circuits in yet another adjusting module according to an embodiment of the present application; and
FIG. 15 is a schematic structural diagram of an electronic device according to an embodiment of the present application.

### DETAILED DESCRIPTION

When accompanying drawings are involved in the description below, the same numbers in different drawings represent the same or similar elements, unless otherwise indicated. The modes of implementation described in the following exemplary embodiments do not represent all modes of implementation consistent with the present application. Rather, they are merely examples of apparatuses and methods consistent with certain aspects of the present application detailed in the appended claims.

In the description of the present application, it shall be understood that the terms "first," "second," and the like are used for descriptive purposes only and are not to be construed as indicating or implying relative importance. The specific meanings of the above terms in the present application can be understood according to specific situations by those of ordinary skill in the art. In addition, in the description of the present application, "a plurality of" refers to two or more unless otherwise specified. The term "and/or" describes an associative relationship between associated objects, and means that there may be three relationships, for example, A and/or B may represent that: A is present alone, A and B are present simultaneously, and B is present alone. The character "/" generally indicates an "or" relationship between the associated objects.

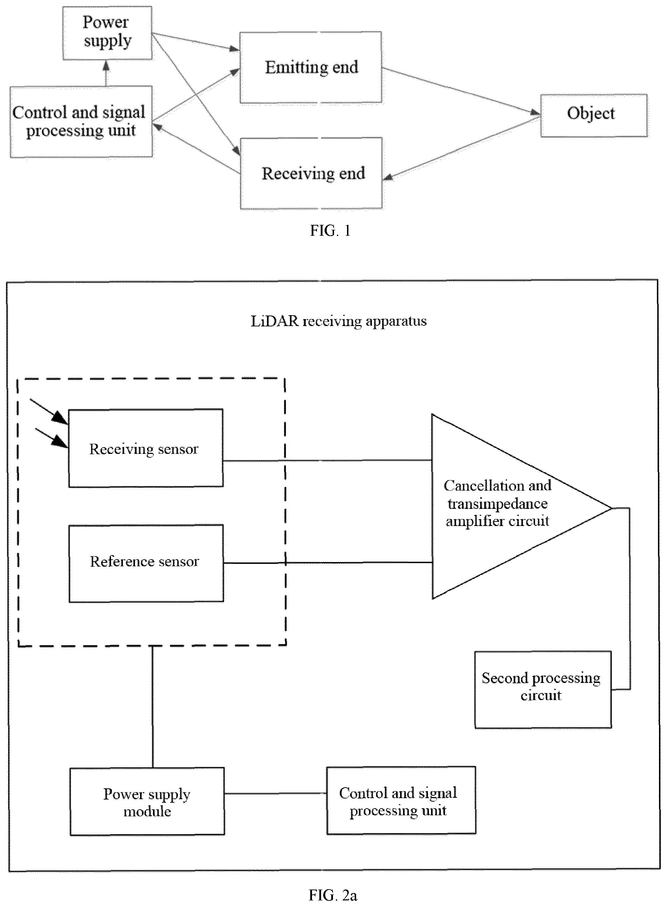

FIG. 1 exemplarily shows a schematic diagram of an application scenario of a method for improving the laser beam ranging capability of a LiDAR system according to an embodiment of the present application. The LiDAR system may include a power supply module, a control and signal processing unit, a pulse laser beam emitting end, and a pulse laser beam receiving end.

The control and signal processing unit of the LiDAR system may be utilized to control the power supply module to supply power to the pulse laser beam emitting end and the pulse laser beam receiving end, control the laser emitter of the pulse laser beam emitting end to emit pulse laser beams to an object and then calculate a distance between the LiDAR system and the object according to the time when the pulse laser beam receiving end receives the pulse laser beams.

As the photocurrent signal sent by the pulse laser beam emitting end is weaker than the bias current signal sent by the bias power supply, even though the two signals have a difference in magnitude, the photocurrent signal is difficult to detect by the pulse laser beam receiving end. Based on this, the pulse laser beam receiving end of the present application may include a receiving sensor and a reference sensor, where the reference sensor is in a shading state and is in a parallel state with the receiving sensor. The power supply module is integrated into the LiDAR receiving apparatus, such that the structure of the LiDAR receiving apparatus is more compact and the power supply mode is more convenient.

FIG. 2a is a structural block diagram of a LiDAR receiving apparatus. The receiving apparatus includes: a receiving sensor and a reference photosensor, and the reference sensor is in a shading state and is connected in parallel with the receiving sensor, and the receiving apparatus further includes a cancellation and transimpedance amplifier circuit. The cancellation and transimpedance amplifier circuit is respectively connected with the receiving sensor, and is configured for performing cancellation and transimpedance amplification processing on current signals output by the receiving sensor and the reference sensor, and for outputting voltage signals obtained after the cancellation and transimpedance amplification processing. The current signal output by the reference sensor is positively correlated with the bias voltage applied to the reference sensor by the power supply. The receiving apparatus further includes a second processing circuit connected with the cancellation and transimpedance amplifier circuits and configured for obtaining distance data through calculation according to the voltage signals obtained after the cancellation and transimpedance amplification processing.

It can be understood that, since the reference photosensor and the detection photosensor are connected in parallel, the bias voltage of the reference photosensor is equal to the bias voltage of the detection photosensor, i.e., the bias current signals of the reference photosensor and the detection photosensor are the same. Meanwhile, since the reference photosensor is in a shading state, the current signal output by the reference photosensor is a bias current signal at any time. Therefore, the voltage signal obtained after the cancellation and transimpedance amplification processing has been subjected to the cancellation processing, a bias voltage part is removed, and only a photovoltage part is remained, so that the voltage signal obtained after the cancellation and transimpedance amplification processing is a photovoltage signal at the time when the laser echo signal reaches the receiving sensor, and should be 0 except for the time when the laser echo signal reaches the receiving sensor. Therefore, the second processing circuit can sensitively detect the voltage signal obtained after the cancellation and transimpedance amplification processing, and take the time when the voltage signal obtained after the cancellation and transimpedance amplification processing is detected as the time when the laser echo signal reaches the detection photosensor, thus improving the sensitivity and the accuracy for detecting the laser echo signal, and also improving the accuracy of distance measurement.

The LiDAR receiving apparatus may further include a power supply module. The power supply module is connected to the receiving sensor and the control and signal processing unit, and is configured for receiving the control signal sent by the control and signal processing unit and applying the bias voltage corresponding to the control signal to the receiving sensor. It can be understood that when the reference photosensor is connected in parallel with the detection photosensor, the power supply module applies a bias voltage to the detection photosensor and simultaneously applies the same bias voltage to the reference photosensor. The power supply module is integrated into the LiDAR receiving apparatus, such that the structure of the LiDAR receiving apparatus is more compact and the power supply mode is more convenient.

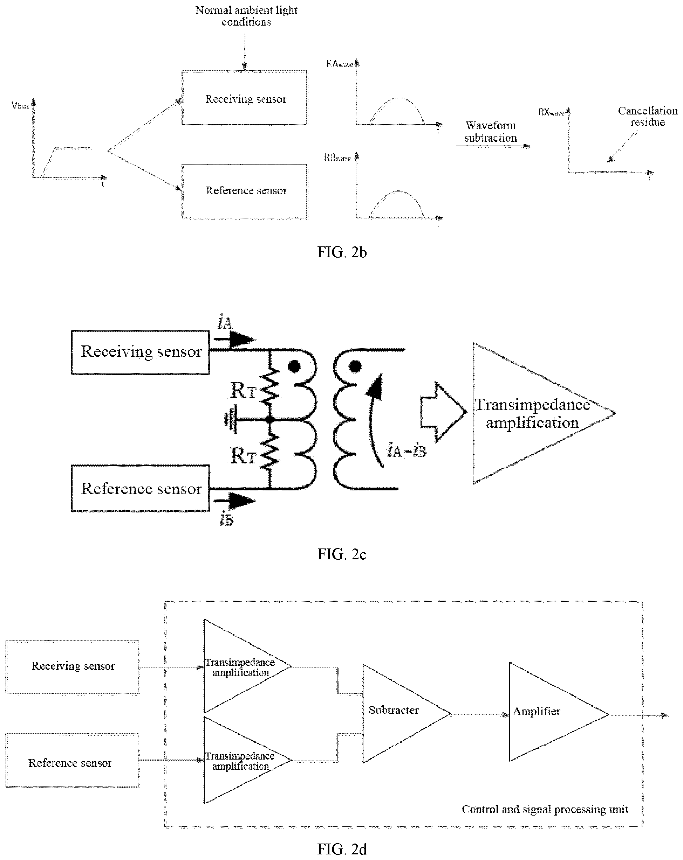

Referring to FIG. 2b, under normal ambient light conditions, when the laser emitter at the pulse laser beam emitting end does not emit pulse laser beams, the cancellation residue is 0 after the voltage signal waveform generated by the receiving sensor is subtracted from that of the reference sensor. Furthermore, after the laser emitter at the pulse laser beam emitting end emits the pulse laser beam to the object, the receiving sensor receives a voltage signal obtained by cancellation and transimpedance amplification processing of echo light of the pulse laser beam, so that the time when the echo light reaches the receiving sensor can be determined, and the voltage signal should be 0 except for the time when the echo light reaches the receiving sensor.

FIG. 2c shows an implementation of the cancellation and transimpedance amplifier circuits. Current signals output by the receiving sensor and the reference sensor are respectively input to two ends of a balanced side of a balun transformer, a residual current after cancellation is coupled to a primary side through the transformer, and then the current signals are input to a transimpedance amplifier for transimpedance amplification, so as to obtain a voltage signal after transimpedance amplification processing. A balun transformer with low insertion loss and high symmetry may be used, that is, a balun transformer with reduced signal attenuation and good cancellation processing performance, so that a photocurrent signal range close to the output of a single photosensor can be obtained. In terms of noise, the thermal noise of the matching resistor RT is mainly increased, which is much smaller than the current noise of the transimpedance amplifier circuit itself (the noise exists in the transimpedance amplification process), and the influence on the signal-to-noise ratio of the photocurrent signal is basically negligible; that is, only a very small amount of thermal noise is added, which the photocurrent signal is basically not attenuated, so the influence on the signal-to-noise ratio is small. Therefore, the photocurrent signal amplification capability of the circuit is hardly reduced.

FIG. 2d shows another implementation of the cancellation and transimpedance amplifier circuits. Current signals output by the receiving sensor and the reference photosensor are respectively input to the transimpedance amplifier for primary amplification, amplified voltage signals are output, then the two paths of amplified voltage signals are input to a subtractor, the voltage signals after cancellation are output, and then secondary amplification is performed on the voltage signals after cancellation. It can be understood that the present application does not limit the specific form of the transimpedance amplifier circuit.

It can be understood that, in the LiDAR with the receiving and cancellation architecture as shown in FIG. 2a, two sensor waveforms undergo cancellation to output real echoes. However, under the glare condition, the sensor receiving the echo is irradiated by the glare, the temperature rises rapidly, while the temperature of the other cancellation reference register does not change synchronously, which causes the breakdown voltages or other equivalent parameters of the two sensors of the two sensors to diverge and no longer match, and leads to the increase of cancellation residue. The larger the temperature difference is, the larger the cancellation residue is. Especially for a single photon sensor, the high-gain characteristic makes it particularly sensitive to ambient light, and a sharp rise in temperature in a glare environment can lead to detection failure.

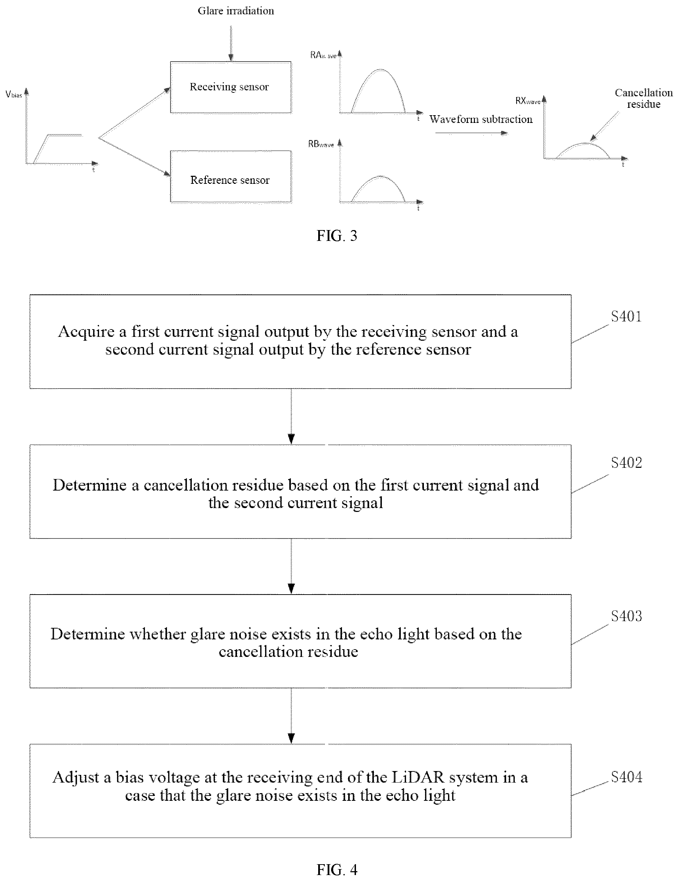

FIG. 3 shows that when the laser emitter at the pulse laser beam emitting end does not emit pulse laser beams under strong ambient light conditions, the cancellation residue is not 0 after the voltage signal waveform generated by the receiving sensor is subtracted from that of the reference sensor due to the influence of glare irradiation. It can be understood that, in the receiving end based on the cancellation architecture as shown in FIG. 3, the two sensor waveforms undergo cancellation to output real echoes. However, as the sensor receiving the echo is irradiated by glare, the temperature rises rapidly, while the temperature of the other cancellation reference sensor does not change synchronously, which causes the breakdown voltages or other equivalent parameters of the two sensors to diverge and no longer match, and leads to the increase of cancellation residue. The larger the temperature difference is, the larger the cancellation residue is. It can be understood that under glare irradiation, the average working current of the receiving sensor increases, the power consumption increases, and therefore, under a certain heat dissipation condition, the temperature increases, which may result in the failure of the target detection due to the fact that the receiving sensor fails at high temperature or outputs abnormal waveforms.

The present disclosure aims to weaken the glare noise influence in the ambient light by adopting the following modes:
1) reducing the amount of ambient light entering the pulse laser beam receiving end
   Structural designs such as extinction and light blocking may be added in the LiDAR system to reduce the external ambient light entering the surface of the receiving sensor through the non-main light path; and/or the bandwidth of the receiving filter may be reduced to reduce the amount of the ambient light entering the main light path;
2) adding a heat dissipation unit in the LiDAR system
   As the receiving sensor may excite redundant working units due to the influence of glare noise, such that the power consumption of the LiDAR system increases, in the embodiment of the present application, it is considered to add a heat dissipation unit may be added in the LiDAR system to reduce the heat generated by the receiving sensor;
3) reducing power consumption of the LiDAR system.

In addition, in the embodiment power consumption may be reduced to reduce the temperature rise of the receiving sensor, so that the influence of glare noise is weakened to reduce or eliminate false target points generated by the glare noise.

Next, the method for improving laser beam ranging capability of a LiDAR system provided in the embodiment of the present application will be introduced with reference to an application scenario diagram of a method for improving the laser beam ranging capability of a LiDAR system shown in FIG. 1, a schematic diagram of a waveform at a pulse laser beam receiving end of a LiDAR system shown in FIG. 2, and a schematic structural diagram of a pulse laser beam receiving end and a control and signal processing unit in the LiDAR system shown in FIG. 3, so as to further detect whether the influence of glare noise still exists in the pulse laser beam receiving end.

FIG. 4 shows a flow flowchart of a method for improving the laser beam ranging capability of a LiDAR system is provided. The method may include the following.

S401, acquiring a first current signal output by the receiving sensor and a second current signal output by the reference sensor.

In some embodiments, noise under current ambient light can be counted, cancellation coding can be performed by using the receiving sensor and the reference sensor after the pulse laser beams are emitted at a same time interval of the continuous detection period, double-cancellation internal coding can be performed by using the receiving sensor and the reference sensor after the pulse laser beams are emitted at different time intervals of the continuous detection period, or the pulse laser beams may not be emitted in one detection period, to detect the cancellation residue generated based on the receiving sensor and the reference sensor. The detection period is configured for representing a preset time period.

It can be understood that, in the embodiment of the present application, the noise statistics means that a noise threshold is set in advance, and the noise amount in the echo light within a preset time is counted. According to the characteristic that the noise density becomes very high under the condition of glare noise, whether glare irradiation exists under the current environmental condition can be determined. In some embodiments, the noise threshold may be set according to an actual test condition that the photon amplitude in the photodetection device and the silicon photomultiplier (SiPM) at the pulse laser beam receiving end is the photon amplitude or the multiphoton amplitude, and the preset time may be set to a time interval corresponding to a distance interval of 20 m to 200 m.

In the embodiment of the present application, the following steps may also be performed before acquiring the first current signal output by the receiving sensor and the second current signal output by the reference sensor:
turning off the laser emitter; and applying a preset bias control signal to the receiving sensor and the reference sensor. The preset bias control signal controls the bias voltage at the receiving end to be smaller than a breakdown voltage in a stray light time period, and controls the bias voltage at the receiving end to be greater than the breakdown voltage in an echo light time period.

The bias voltage is configured for representing the voltage applied to the receiving sensor and the reference sensor.

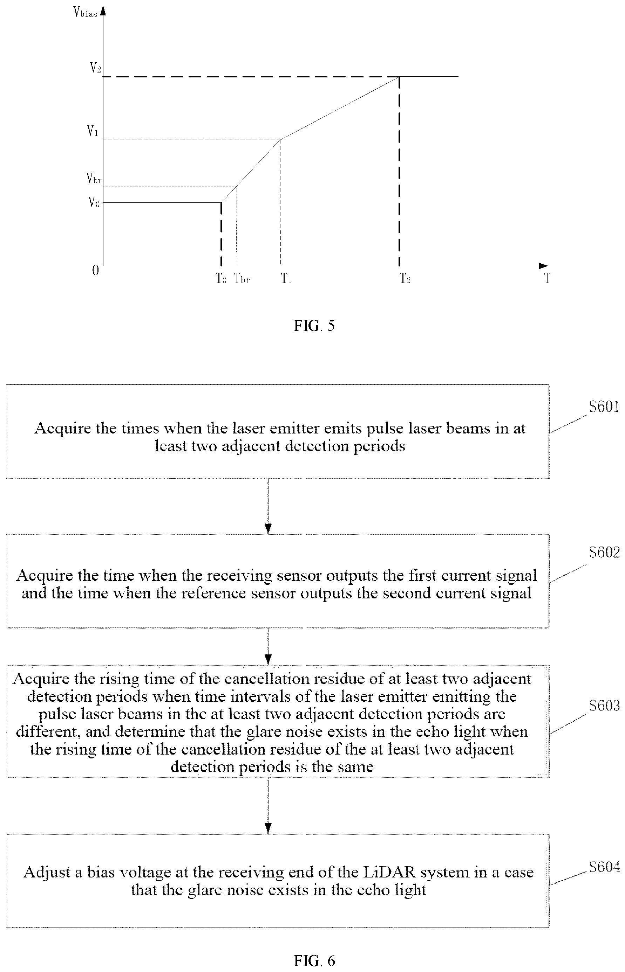

FIG. 5 shows a schematic diagram of a waveform when a preset bias control signal is applied to the receiving sensor and the reference sensor. The bias voltage applied by the control and signal processing unit in a first preset time period between an emission time T₀ and an initial time T_{br} is smaller than the breakdown voltage; the emission time is the emission time of the laser signal, and the initial time is later than the receiving time of the stray light signal, so that the first preset time period is a time period including the receiving time of the stray light signal, that is, the stray light time period. Furthermore, in the embodiment of the present application, the numerical value of the bias voltage can be continuously increased at the same rate in a second preset time period between the initial time T_{br} and the first time T₁. Furthermore, in the embodiment of the present application, a value of the bias voltage corresponding to the current moment may be determined according to a corresponding relation between the receiving time of laser echo signals and the bias voltage in a third preset time period between the first time T₁ and the second time T₂, and the applied bias voltage may also be adjusted according to the value of the bias voltage corresponding to the current moment.

Referring to FIG. 5, the laser emission time may be T₀, the initial time may be T_{br}, and since the initial time is later than the receiving time of stray light signals, in the first preset time period of 0-T_{br}, the bias voltage is smaller than the breakdown voltage V_{br}, and the photoelectric amplification gain is approximately zero, so that the excitation of the receiving sensor by the stray light signal is avoided. In the second preset time period and the third preset time period of T_{br}-T₂, that is, in the echo light time period, the bias voltage rises rapidly such that the photoelectric amplification factor of the receiving sensor increases rapidly, so as to ensure that the detection sensor can amplify the real laser echo signals after the stray light signals sufficiently and effectively, and the real laser echo signals can be detected. In the third preset time period of T₁-T₂, the LiDAR receiving apparatus may amplify the laser echo signals sufficiently and effectively. When short-distance ranging is performed in the second preset time period, the flight time of the laser echo signals is short, and the intensity of the laser echo signals is high, so that the gain requirement is low, and supersaturation is avoided; and when long-distance ranging is performed in the third preset time period, the flight time of the laser echo signals is long, and the intensity of the laser echo signals is low, so that the gain requirement is high, and the problem that the laser echo signals are undetectable is avoided.

S402, determining a cancellation residue based on the first current signal and the second current signal.

The laser emitter at the pulse laser beam emitting end may be utilized to emit pulse laser beams. When it is detected that a bias voltage applied to the receiving sensor is greater than a breakdown voltage of the receiving sensor, a first current signal output by the receiving sensor and a second current output by a reference sensor are acquired and detected. The first current signal is related to the laser echo signal corresponding to the emitted laser signal and the bias voltage, and the second current is related to the bias voltage.

In some embodiments, the echo light signal may excite the receiving sensor to detect the echo light signal, and generate a current signal of the echo light corresponding to the pulse laser beam emitted by the laser emitter, so as to generate a cancellation residue. However, due to the influence of the glare noise, the stray echo signal generated by the glare noise may also generate an echo light signal. Therefore, it is necessary to further determine whether the glare noise exists in the received cancellation residue.

S403, determining whether glare noise exists in the echo light based on the cancellation residue.

It can be understood that, in a case that the current ambient light is normal light, the cancellation residue between the receiving sensor and the reference sensor is 0. In a case that glare irradiation exists in the current ambient light, the cancellation residue between the receiving sensor and the reference sensor may not be 0, that is, the receiving sensor may receive echo light generated by glare noise.

Furthermore, in a case that the current ambient light is normal light and the laser emitter at the pulse laser beam emitting end emits pulse laser beams, the cancellation residue between the receiving sensor and the reference sensor is not 0, and the receiving sensor may detect a current signal generated by echo light of the pulse laser beam. In a case that glare irradiation exists in the current ambient light and the laser emitter at the pulse laser beam emitting end emits pulse laser beams, the cancellation residue between the receiving sensor and the reference sensor is not 0, and current signals detected by the receiving sensor may include not only a current signal generated by echo light of the pulse laser beam but also a current signal generated by glare noise.

S404, adjusting a bias voltage at the receiving end of the LiDAR system in a case that the strong light noise exists in the echo light.

The influence of glare noise may be reduced by reducing the bias voltage of the LiDAR system. Under the influence of glare noise, the noise output by the receiving sensor is high, and the temperature rises rapidly, which may cause the failure of cancellation. Therefore, in the embodiment of the present application, the excitation of the noise at the receiving end and the average current of the receiving sensor can be reduced by reducing the bias voltage, so as to ensure that the cancellation residue does not exceed the standard and false scenes of the cancellation residue are prevented.

For example, under the non-glare irradiation condition, the background noise at the pulse laser beam receiving end is low, and when the current bias voltage of the LiDAR system exceeds the breakdown voltage, the receiving sensor can detect a weak current signal so as to ensure the ranging capability of the LiDAR system under the non-glare condition. Under the glare irradiation condition, in the embodiment of the present application, the bias voltage can be reduced to the voltage reduction threshold such that the gain of the receiving sensor is reduced, that is, the amplitude of the noise is reduced in a case that the LiDAR system does not change the integral signal-to-noise ratio of the pulse laser beam receiving end.

The method for adjusting the bias voltage of the LiDAR system may include the following steps.

A temperature or a current of the receiving sensor is acquired. In the ranging process of the LiDAR system, the temperature sensor can be controlled to detect the temperature of the receiving sensor according to a preset time interval; or the current detecting module can be controlled to detect the current of the receiving sensor according to a preset time. The preset time interval described above may be 2 ms, 3 s, etc., which is not limited in the present application.

A target bias voltage is determined according to the received temperature or the received current. After the temperature or the current of the receiving sensor is acquired, the target bias voltage corresponding to the working temperature described above may be determined by inquiring a preset mapping relation. The preset mapping relation may be a temperature-bias voltage relation or a current-bias voltage relation. Due to the increase of the current, the heating effect of the receiving sensor may be intensified, and the temperature of the receiving sensor may increase; the current or the temperature may be detected, or both the current and the temperature may be detected simultaneously. The receiving capacity of the receiving sensor is related to the bias voltage. When the bias voltage of the same receiving sensor is unchanged, the receiving capability is different due to the change in the working temperature. The selected receiving sensor may obtain its temperature-bias voltage relation curve or current-bias voltage relation curve through measurement. Taking the temperature-bias voltage relation curve as an example, when the obtained working temperature of the receiving sensor is 40 °C, the pressure difference ΔV corresponding to the temperature described above that can be obtained by inquiring the mapping relation curve is 30V, that is, when the working temperature of the receiving sensor is 40 °C, the target bias voltage is 30V.

A voltage value applied to an anode and/or a cathode of the receiving sensor is adjusted according to the target bias voltage. A target bias voltage is determined based on the temperature or the current of the receiving sensor, and is adjusted to compensate for variations in temperature or current affecting the receiving capability of the receiving sensor.

In some embodiments, the duty ratio of the modulation signal applied to a negative electrode and/or a positive electrode of the power supply module is determined according to the target bias voltage. The modulation signal is sent to the power supply module, and the power is output to the anode and/or the cathode of the receiving sensor by the power supply module according to the modulation signal. For example, a voltage value applied to the cathode of the receiving sensor is detected and acquired; the voltage value required to be applied to the anode of the receiving sensor is determined according to the target bias voltage and the voltage value applied to the cathode of the receiving sensor; and the duty ratio of the modulation signal of the negative electrode of the power supply module is determined according to the voltage value of the anode of the receiving sensor, and the modulation signal is sent to the negative electrode of the power supply module. Or, a voltage value applied to the anode of the receiving sensor is detected and acquired; the voltage value required to be applied to the cathode of the receiving sensor is determined according to the target bias voltage and the voltage value applied to the anode of the receiving sensor; and the duty ratio of the modulation signal of the positive electrode of the power supply module is determined according to the voltage value of the cathode of the receiving sensor, and the modulation signal is sent to the positive electrode of the power supply module. When the receiving sensor is in a normal working state, the temperature or current of the receiving sensor may also be changed due to slow temperature change caused by factors such as working environmental temperature, self temperature rise, and device aging. At this moment, the bias voltage of the receiving sensor is adjusted to be in a good working state by sending modulation signals with different duty ratios to the positive electrode and/or the negative electrode of the power supply module, so that the dynamic adjustment of the bias voltage during the working period of the receiving sensor is realized, and the distance measurement range and the reliability of the LiDAR system are improved.

In some embodiments, a switching signal applied to a high-voltage amplifier of the power supply module is determined according to the target bias voltage, and the high-voltage amplifier switches gears according to the received switching signal to output different positive voltage values. For example, a first signal of low-gear switching is sent to a high-voltage amplifier, and the high-voltage amplifier outputs a low-gear positive voltage value, such as 1V; and a second signal of high-gear switching is sent to the high-voltage amplifier, and the high-voltage amplifier outputs a high-gear positive voltage value, such as 5V. The positive voltage value output by the high-voltage amplifier may also include a plurality of gears, such as 3 or 10 gears, which can be set according to an adjustment requirement and is not limited herein. When the receiving sensor is irradiated by glare, a large photocurrent is instantaneously generated, the temperature or current of the receiving sensor is suddenly changed, a positive voltage value is instantaneously pulled to a low gear by controlling a high-voltage amplifier with quick response, the bias voltage of the receiving sensor is quickly adjusted to be low, and a strong echo signal can be effectively received while the device is prevented from being damaged. When the glare irradiation is finished, the temperature or the current of the receiving sensor is reduced, the positive voltage value is switched back to a high gear by controlling the high-voltage amplifier, and the normal working state is recovered. The instant blindness of the LiDAR system caused by glare irradiation is avoided, and the detection capability is improved.

In some embodiments, determining a target bias voltage according to the received temperature or the received current and adjusting a voltage value applied to an anode and/or a cathode of the receiving sensor according to the target bias voltage may also be: determining whether the temperature or the current of the receiving sensor meets a preset condition. If yes, determining a duty ratio of a modulation signal applied to a negative electrode and/or a positive electrode of the power supply module according to the target bias voltage; if no, determining a switching signal applied to a high-voltage amplifier of the power supply module according to the target bias voltage, and switching gears by the high-voltage amplifier according to the received switching signal to output different positive voltage values. The preset condition met by the temperature or the current of the receiving sensor refers to a sudden change in the temperature or the current. The temperature or the current of the receiving sensor detected at the current time may be compared with the previous detection result. If the difference value of the two detection results is greater than the threshold, the temperature or the current of the receiving sensor is considered to be suddenly changed; if the difference value of the two detection results is smaller than or equal to the threshold, the temperature or the current of the receiving sensor is considered to have no sudden change. When the temperature or the current of the receiving sensor changes suddenly, it means that a large photocurrent is instantaneously generated, with the receiving sensor being irradiated by glare, a positive voltage value is instantaneously pulled to a low gear by controlling a high-voltage amplifier with quick response, the bias voltage of the receiving sensor is quickly adjusted to be low, and a strong echo signal can be effectively received while the device is prevented from being damaged. When the glare irradiation is finished, the temperature or the current of the receiving sensor is reduced, the positive voltage value is switched back to a high gear by controlling the high-voltage amplifier, and the normal working state is recovered. When the temperature or the current of the receiving sensor does not change suddenly, it means that the receiving sensor is in a normal working state, and a bias voltage does not need to be adjusted instantaneously and quickly. However, the temperature or current of the receiving sensor can also be changed due to slow temperature change caused by factors such as the environmental temperature of the receiving sensor, the self temperature rise, and the device aging. At this moment, the bias voltage of the receiving sensor is adjusted to be in a good working state by sending modulation signals with different duty ratios to the positive electrode and/or the negative electrode of the power supply sub-circuit through the control sub-circuit, so that the dynamic adjustment of the bias voltage during the working period of the receiving sensor is realized, and the distance measurement range and the reliability of the LiDAR system are improved.

In the embodiment of the present application, the influence of glare noise can also be avoided in a voltage reduction mode of the emitting end. For example, in the embodiment of the present application, a main pulse laser beam and a sub pulse laser beam may be emitted in two consecutive detection periods, respectively, And emission power of the main pulse laser beam emitted for the first time is higher than an emission power of the sub pulse laser beam emitted for the second time. The influence of glare noise is avoided by reducing the voltage corresponding to the emission power of the main pulse laser beam.

It can be understood that the main pulse laser beam has a high emission power and can be configured for detecting objects at long distances, for example in a range of 15 meters to 60 meters. The sub pulse laser beam has a low emission power and can be configured for detecting objects at short distances, for example, objects within 15 meters.

In the embodiment of the present application, when the voltage corresponding to the emission power of the emitted main pulse laser beam is reduced to a preset constant voltage value during the remote detection, the bias voltage corresponding to the receiving end is correspondingly reduced after the emitting end emits a photon signal, so that the average current of the receiving sensor is reduced to prevent the cancellation residue from exceeding the cancellation threshold, and false scenes of the cancellation residue are avoided. In addition, since the voltage corresponding to the emission power of the emitted sub pulse laser beam is relatively low, no adjustment is required.

In the embodiment of the present application, point cloud filtering on glare noise in the echo light may be performed. For example, after glare noise data in the point cloud data of the echo light are removed by using the time domain characteristics of the echo light data, smoothing filtering or feature extraction is performed on the echo light data of the pulse laser beam.

In the embodiment of the present application, a first current signal output by a receiving sensor and a second current signal output by a reference sensor are acquired. A cancellation residue is determined based on the first current signal and the second current signal. Whether glare noise exists in echo light is determined based on the cancellation residue. A bias voltage at a receiving end of the LiDAR system is adjusted in a case that the glare noise exists in the echo light. Therefore, in the embodiment of the present application, whether glare noise exists in the echo light can be detected by arranging the receiving sensor and the reference sensor at the receiving end of the LiDAR system. If yes, the bias voltage at the receiving end is reduced to reduce the average current of the receiving sensor and reduce noise excitation, so that the accuracy of the ranging capability of the LiDAR system is improved.

FIG. 6 shows a schematic flowchart of another method for improving the laser beam ranging capability of a LiDAR system according to an embodiment of the present application. In a case that the emission power of the pulse laser beams of the laser emitter in at least two adjacent detection periods is the same, as shown in FIG. 6, the method for improving the laser beam ranging capability of a LiDAR system at least includes the following steps.

S601, acquiring times when the laser emitter emits the pulse laser beams in the at least two adjacent detection periods.

The pulse laser beams with the same emission power can be understood as the same emission voltage at the emitting end.

In the embodiment of the present application, the time when the laser emitter emits the pulse laser beams in each detection period in a plurality of detection periods is continuously acquired in a case that the voltages at the emitting end are the same.

S602, acquiring the time when the receiving sensor outputs the first current signal and the time when the reference sensor outputs the second current signal.

In the embodiment of the present application, the occurrence time of a first current signal corresponding to echo light when the receiving sensor detects the echo light and the time when the reference sensor outputs a second current signal within the corresponding time can be recorded.

S603, acquiring rising times of the cancellation residues of the at least two adjacent detection periods when time intervals of the laser emitter emitting the pulse laser beams in the at least two adjacent detection periods are different, and determining that the glare noise exists in the echo light when the rising times of the cancellation residues of the at least two adjacent detection periods are the same.

It can be understood that the emission power of the LiDAR system in two adjacent detection periods is the same, and accordingly, the time when the bias voltages are applied to the receiving sensor and the reference sensor is also the same.

In some embodiments, the rising time of the bias voltages on the receiving sensor and the reference sensor are configured for indicating the time when the bias voltages start to increase from a constant voltage. For example, in FIG. 5, the bias voltage is a constant voltage V₀ before time T₀, and the bias voltage starts to increase after time T₀, that is, time T₀ indicates the rising time of the bias voltage at the receiving end of the LiDAR system.

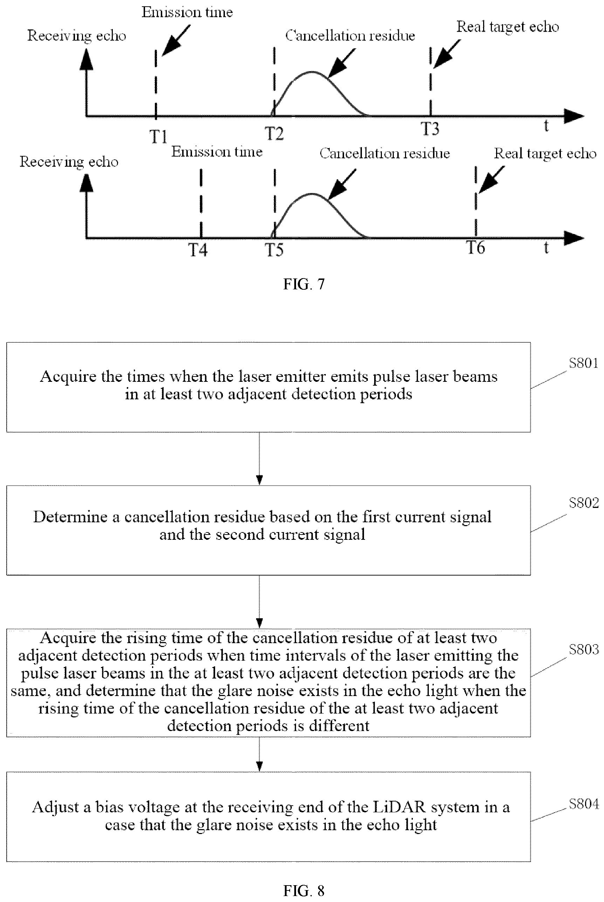

Referring to FIG. 7, the emission power of the LiDAR system in two adjacent detection periods is the same, the pulse laser beam emission time T₁ in the first detection period 1S is 0.5 ms, and the pulse laser beam emission time T₄ in the second detection period 1S is 1.6 ms. That is, in the case of different emission time intervals, the first current signal output by the receiving sensor and the second current signal output by the reference sensor in the two detection periods are acquired.

In the embodiment of the present application, the bias voltage at the receiving end of the LiDAR system can be recovered to the initial state V₀ at the beginning of each detection period.

Referring to FIG. 7, the pulse laser beam emission time in the first detection period is T₁, the cancellation residue generation time is T₂, the time of receiving the real target echo of the object is T₃, the pulse laser beam emission time in the second detection period is T₄, the cancellation residue generation time is T₅, and the time of receiving the real target echo of the object is T₆. Since the pulse laser beam emission time in two adjacent detection periods is relatively different, but the cancellation residue occurs at relatively the same time in the two detection periods, it can be determined that glare noise may exist in the ambient light in the two detection periods.

S604, adjusting a bias voltage at the receiving end of the LiDAR system in a case that the strong light noise exists in the echo light.

S604 corresponds to S404, which is not repeated herein.

It can be understood that, in the above embodiments, glare noise is identified by adjusting the time intervals of emitting the pulse laser beams. As can be seen from the above analysis, the cancellation residue may increase under the glare irradiation condition and may be erroneously detected as a target. But the occurrence time of the cancellation residue is related to the rising time of the bias voltage and is not related to the pulse laser beam emission time, but the real target echo position is not strongly related to the rising time of the cancellation bias voltage and is related to the pulse laser beam emission time. Therefore, in the embodiment of the present application, whether the echo light is a real target and has glare noise can be determined by adjusting the time interval of emitting the pulse laser beams in adjacent detection periods.

FIG. 8 schematically illustrates a schematic flowchart of another method for improving the laser beam ranging capability of a LiDAR system according to an embodiment of the present application. In a case that the emission power of the pulse laser beams of the laser emitter in at least two adjacent detection periods is different, as shown in FIG. 8, the method for improving the laser beam ranging capability of a LiDAR system at least includes the following steps.

S801, acquiring times when the laser emitter emits the pulse laser beams in the at least two adjacent detection periods.

S801 corresponds to S501, which is not repeated herein.

S802, determining a cancellation residue based on the first current signal and the second current signal.

S802 corresponds to S402, which is not repeated herein.

S803, acquiring rising times of the cancellation residues of the at least two adjacent detection periods when time intervals of the laser emitter emitting the pulse laser beams in the at least two adjacent detection periods are the same, and determining that the glare noise exists in the echo light when the rising times of the cancellation residues of the at least two adjacent detection periods are different.

It can be understood that the same pulse laser beam emission time but different power of the laser emitter emitting the pulse laser beams in adjacent detection periods may result in different time moments of applying the bias voltages to the receiving sensor and the reference sensor.

In some embodiments, in two adjacent detection periods in the case of different emission powers, the pulse laser beam emission time T₁ in the first detection period 1S is 0.5 ms, and the pulse laser beam emission time T₄ in the second period 1S is also 0.5 ms. That is, in the case of the same emission time interval, the first current signal output by the receiving sensor and the second current signal output by the reference sensor in the two consecutive periods are acquired.

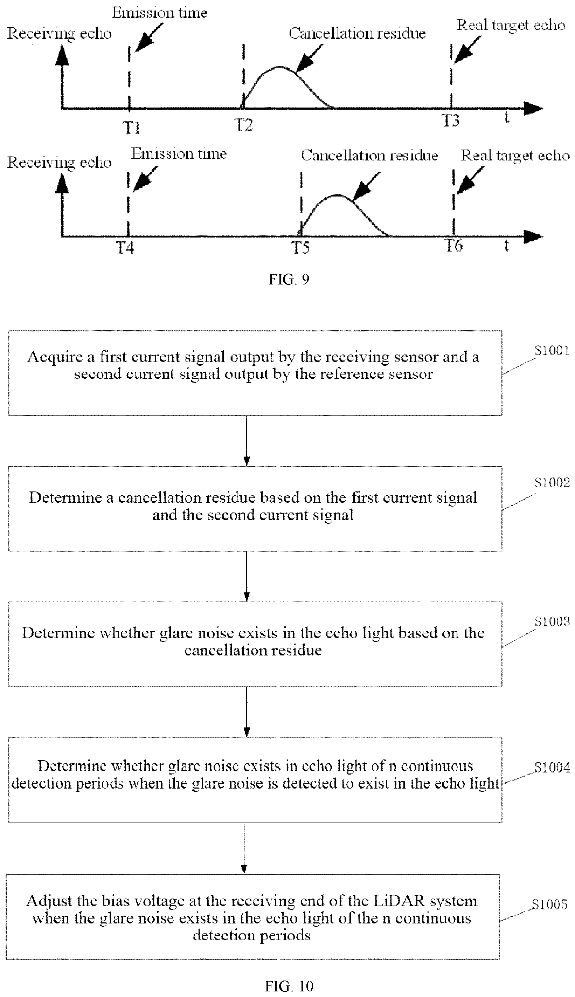

Referring to FIG. 9, the pulse laser beam emission time in the first detection period is T₁, the cancellation residue generation time is T₂, the time of receiving the real target echo of the object is T₃, the pulse laser beam emission time in the second detection period is T₄, the cancellation residue generation time is T₅, and the time of receiving the real target echo of the object is T₆. Since the emission time intervals of the pulse laser beams in two detection periods are the same, that is, the cancellation residue exists at relatively different time moments in adjacent detection periods, it can be determined that glare noise may exist in the ambient light in the two detection periods.

S804, adjusting a bias voltage at the receiving end of the LiDAR system in a case that the strong light noise exists in the echo light.

S804 corresponds to S404, which is not repeated herein.

It can be understood that, since the occurrence time of the cancellation residue is related to the rising time of the bias voltage and is not related to the pulse laser beam emission time, the real target echo position is not strongly related to the rising time of the cancellation bias voltage and is related to the pulse laser beam emission time. Therefore, in the embodiment of the present application, whether the echo light is a real target and has glare noise can be determined through the emission time of the pulse laser beams and the occurrence time of the cancellation residue.

In addition, in some embodiments, the method for improving the laser beam ranging capability of a LiDAR system provided in the embodiment of the present application may further include detecting whether glare noise exists in the environment in a case that the laser emitter is turned off. For example, a bias voltage greater than a breakdown voltage may be applied to the receiving sensor and the reference sensor such that the receiving sensor can receive the light noise, and then the numerical value of the cancellation residue is determined based on a first voltage corresponding to the receiving sensor and a second voltage corresponding to the reference sensor. The glare noise is determined to exist in the ambient light in the case that the numerical value of the cancellation residue is greater than the cancellation residue detection threshold.

In the embodiment of the present application, the control and signal processing unit may process the first current signal output by the receiving sensor in the adjacent detection period to obtain the first voltage and process the second current signal output by the reference sensor to obtain the second voltage.

For example, in a detection period, the laser emitter at the emitting end does not emit pulse laser beams, but the receiving sensor at the receiving end is still turned on to receive echo light. Furthermore, bias voltages are applied to the receiving sensor and the reference sensor to acquire the cancellation residue generated by light noise, the numerical value of the cancellation residue is compared with a detection threshold of the cancellation residue. If the numerical value of the cancellation residue exceeds the detection threshold of the cancellation residue, it can be determined that glare irradiation exists in the current environment, and if the numerical value of the cancellation residue is not greater than the detection threshold of the cancellation residue, it can be determined that there is no glare irradiation in the current environment. It can be understood that the stronger the light noise is, the greater the numerical value of the cancellation residue is. FIG. 10 schematically illustrates a schematic flowchart of another method for improving the laser beam ranging capability of a LiDAR system according to an embodiment of the present application. As shown in FIG. 10, the method for improving the laser beam ranging capability of a LiDAR system may at least include the following steps.

S1001, acquiring a first current signal output by the receiving sensor and a second current signal output by the reference sensor.

S1001 corresponds to S401, which is not repeated herein.

S1002, determining a cancellation residue based on the first current signal and the second current signal.

S1002 corresponds to S402, which is not repeated herein.

S1003, determining whether glare noise exists in the echo light based on the cancellation residue.

S1003 corresponds to S403, which is not repeated herein.

S1004, determining whether glare noise exists in echo light of n continuous detection periods when the glare noise is detected to exist in the echo light.

In some embodiments, the receiving sensor in the embodiment of the present application may acquire n pulse laser beams emitting to the object by the pulse laser beam emitting end in n continuous detection periods. Furthermore, the receiving sensor may correspondingly output n first current signals and the reference sensor may correspondingly output n second current signals.

In the embodiment of the present application, a corresponding first voltage signal and a corresponding second voltage signal may be generated based on the first current signal output by the receiving sensor and the second current signal output by the reference sensor in each detection period. Furthermore, the numerical value of the cancellation residue in each detection period may be determined according to a waveform relation between the first voltage signal and the second voltage signal.

It can be understood that, in the case that the cancellation residue existing in each detection period is not 0, glare noise may exist in the echo light received by the receiving sensor.

S1005, when the strong light noise exists in the echo light of n continuous detection periods, adjusting the bias voltage at the receiving end of the LiDAR system.

Furthermore, in the embodiment of the present application, the bias voltage at the receiving end of the LiDAR system may be adjusted, based on a voltage reduction threshold, in m continuous detection periods.

In the embodiment of the present application, in the case that glare noise exists in echo light of n continuous detection periods, voltage is reduced and m detection periods are executed on the basis of an initial bias voltage value in each detection period to acquire detection distances of m detection periods, and after m times of glare distance detection is completed, the LiDAR system may exit from the glare detection mode to recover the voltage at the emitting end to the state before adjustment.

In the embodiment of the present application, the bias voltage at the receiving end of the LiDAR system can be reduced, and the point cloud filtering can be performed on the glare noise to avoid the problems caused by glare noise including the failure of the sensor due to high temperature, detection failure, false scenes, or the like.

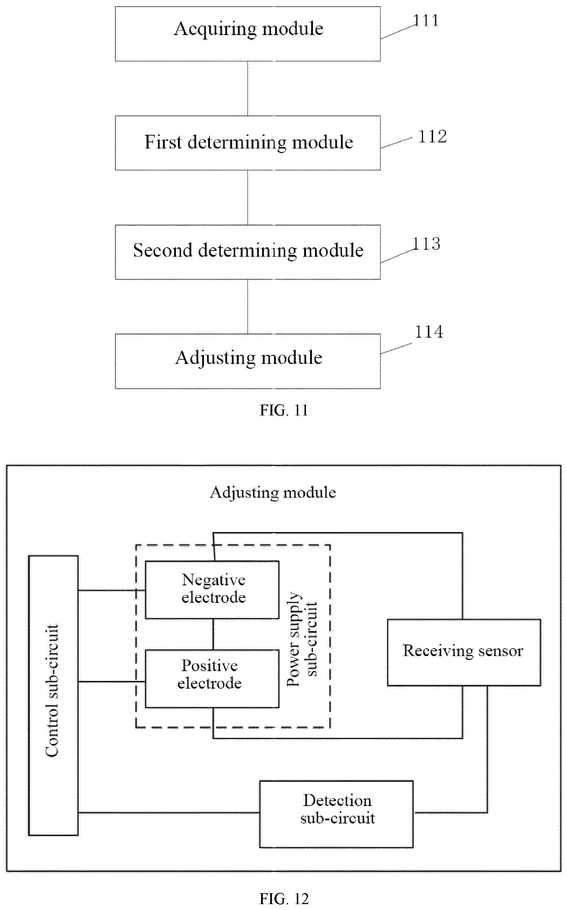

FIG. 11 is a schematic structural diagram of an apparatus for improving the laser beam ranging capability of a LiDAR system according to an exemplary embodiment of the present application. The apparatus for improving the laser beam ranging capability of a LiDAR system can be arranged in electronic devices such as terminal equipment to execute the method for improving the laser beam ranging capability of a LiDAR system in any embodiment described above. The LiDAR system includes: a laser emitter for emitting pulse laser beams, a receiving sensor for receiving echo light, and a reference sensor in a shading state, where the receiving sensor and the reference sensor are positioned at a receiving end of the LiDAR system. As shown in FIG. 11, the apparatus for improving the laser beam ranging capability of a LiDAR system includes:
an acquiring module 111, configured for acquiring a first current signal output by the receiving sensor and a second current signal output by the reference sensor;
a first determining module 112, configured for determining a cancellation residue based on the first current signal and the second current signal;
a second determining module 113, configured for determining whether glare noise exists in the echo light based on the cancellation residue; and
an adjusting module 114, configured for adjusting a bias voltage at the receiving end of the LiDAR system in a case that the glare noise exists in the echo light.

The adjusting module of the bias voltage of the LiDAR system may include a control sub-circuit, a detection sub-circuit, and a receiving sensor. The receiving sensor is configured for receiving the echo light signal and outputting a current signal. The detection sub-circuit is connected to the receiving sensor and is configured for detecting the temperature or the current of the receiving sensor. A first end of the control sub-circuit is connected with the detection sub-circuit, and a second end of the control sub-circuit is connected with the receiving sensor. The control sub-circuit is configured for emitting a first signal to the detection sub-circuit to enable the detection sub-circuit to detect the temperature or the current of the receiving sensor and receiving a detection result returned by the detection sub-circuit, and is further configured for determining a target bias voltage according to the received temperature or the received current and adjusting the voltage value applied to the anode and/or the cathode of the receiving sensor according to the target bias voltage.

In some embodiments, the control sub-circuit determines a target bias voltage corresponding to the temperature or the current according to a preset mapping relation, and adjusts the voltage applied to the anode and/or the cathode of the receiving sensor according to the target bias voltage. The preset mapping relation may be a temperature-bias voltage relation or a current-bias voltage relation. Due to the increase of the current, the heating effect of the receiving sensor may be intensified, and the temperature of the receiving sensor may increase. The current or the temperature may be detected, or both the current and the temperature may be detected simultaneously. The receiving capacity of the receiving sensor is related to the bias voltage. When the bias voltage of the same receiving sensor is unchanged, the receiving capability is different due to the change in the working temperature. The selected receiving sensor may obtain its temperature-bias voltage relation curve or current-bias voltage relation curve through measurement.

As shown in FIG.12, the adjusting module may include a power supply sub-circuit, a negative electrode of the power supply sub-circuit is connected to an anode of the receiving sensor, and a positive electrode of the power supply sub-circuit is connected to a cathode of the receiving sensor. The control sub-circuit determines the duty ratio of the modulation signal applied to the negative electrode and/or the positive electrode of the power supply sub-circuit based on the target bias voltage. The positive electrode and/or the negative electrode of the power supply sub-circuit receives the modulation signal sent by the control sub-circuit and outputs power according to the modulation signal. For example, the control sub-circuit detects a voltage value applied to the cathode of the receiving sensor; the voltage value required to be applied to the anode of the receiving sensor is determined according to the target bias voltage and the voltage value applied to the cathode of the receiving sensor; the duty ratio of a modulation signal of the negative electrode of the power supply sub-circuit is determined according to the voltage value of the anode of the receiving sensor, and the modulation signal is sent to the negative electrode of the power supply sub-circuit. Or, the control sub-circuit detects a voltage value applied to the anode of the receiving sensor; the voltage value required to be applied to the cathode of the receiving sensor is determined according to the voltage value of the target bias voltage applied to the anode of the receiving sensor; the duty ratio of a modulation signal of the positive electrode of the power supply sub-circuit is determined according to the voltage value of the cathode of the receiving sensor, and the modulation signal is sent to the positive electrode of the power supply sub-circuit. When the receiving sensor is in a normal working state, the temperature or current of the receiving sensor may also be changed due to slow temperature change caused by factors such as working environmental temperature, self temperature rise and device aging. At this moment, the bias voltage of the receiving sensor is adjusted to be in a good working state by sending modulation signals with different duty ratios to the positive electrode and/or the negative electrode of the power supply sub-circuit through the control sub-circuit, thus realizing the dynamic adjustment of the bias voltage during the working period of the receiving sensor, and improving the distance measurement range and the reliability of the LiDAR system.

The adjustment circuit may also include a voltage dividing sub-circuit. One end of the voltage dividing sub-circuit being is connected to the anode of the power supply sub-circuit, and the other end of the voltage dividing sub-circuit is connected to the cathode of the receiving sensor. The voltage-dividing sub-circuit is connected in series between the receiving sensor and the anode, and can share part of voltage to generate relatively large voltage drop. The positive voltage value of the cathode of the receiving sensor is reduced, and the bias voltages at both ends of the receiving sensor are reduced. When the receiving sensor receives more light, the generated induced current is larger, the voltage drop generated by the voltage dividing sub-circuit is also larger, the bias voltage of the receiving sensor can be effectively reduced, thus avoiding the supersaturation condition. In some embodiments, the voltage dividing sub-circuit may be a resistor module, and the resistor module may generate different voltage drops according to the magnitude of the induced current. The larger the induced current is, the larger the voltage drop is, and the smaller the induced current is, the smaller the voltage drop is. The circuit is simple without the need of complex control to utilize inherent properties of the device.

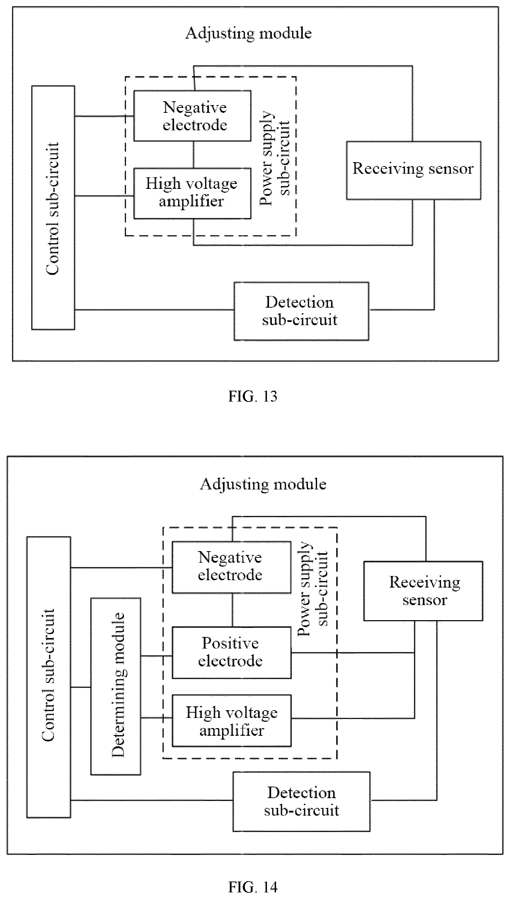

However, if the resistance of the series voltage dividing sub-circuit is too small, the active voltage drop effect is not obvious for the sharp increase of the induced current caused by the glare, and if the resistance is too large, the voltage drop in the normal working state is too large, which affects the ranging capability of the receiving sensor. In order to address the above problem, as shown in FIG. 13, the adjusting module may further include a power supply sub-circuit. A negative electrode of the power supply sub-circuit is connected to the anode of the receiving sensor, and a positive electrode of the power supply sub-circuit is connected to the cathode of the receiving sensor. The positive electrode of the power supply sub-circuit is set as a high-voltage amplifier and is connected to the cathode of the receiving sensor, and the high-voltage amplifier receives the switching signal sent by the control sub-circuit and switches gears according to the received switching signal to output different positive voltage values. In some embodiments, the control sub-circuit sends a low-gear switching signal to the high-voltage amplifier, and the high-voltage amplifier outputs a low-gear positive voltage value, such as 1V; the control sub-circuit sends a high-gear switching signal to the high-voltage amplifier, and the high-voltage amplifier outputs a high-gear positive voltage value, such as 5V. The positive voltage value output by the high-voltage amplifier may also include a plurality of gears, such as 3 or 10 gears, which can be set according to an adjustment requirement and is not limited herein. When the receiving sensor is irradiated by glare, a large photocurrent is instantaneously generated, the temperature or current of the receiving sensor is suddenly changed, a positive voltage value is instantaneously pulled to a low gear by controlling a high-voltage amplifier with quick response, the bias voltage of the receiving sensor is quickly adjusted to be low, and a strong echo signal can be effectively received while the device is prevented from being damaged. When the glare irradiation is finished, the temperature or the current of the receiving sensor is reduced, the positive voltage value is switched back to a high gear by controlling the high-voltage amplifier, and the normal working state is recovered, thereby avoiding the instant blindness of the LiDAR system caused by glare irradiation and improving the detection capability.

As shown in FIG. 14, the adjusting module may further include a power supply sub-circuit and a determining module. A negative electrode of the power supply sub-circuit is connected to the anode of the receiving sensor, a first end of a positive electrode of the power supply sub-circuit is directly connected to the cathode of the receiving sensor, and a second end of the positive electrode of the power supply sub-circuit is set as a high voltage amplifier and connected to the cathode of the receiving sensor. The first end and the second end of the positive electrode of the power supply sub-circuit may both output powers to the cathode of the receiving sensor. The positive electrode and/or the negative electrode of the power supply sub-circuit receives the modulation signal sent by the control sub-circuit and outputs a power according to the modulation signal; the high-voltage amplifier receives the switching signal sent by the control sub-circuit and switches gears according to the received switching signal to output different positive voltage values. The determining module is configured for determining whether the temperature or the current of the receiving sensor meets a preset condition and selecting a receiver to which a signal is sent according to the determination result. The receiver is either the positive electrode and/or the negative electrode of the power supply sub-circuit or the high-voltage amplifier. In some embodiments, the control sub-circuit receives the temperature or the current of the receiving sensor, and the determining module determines whether the temperature or the current of the receiving sensor meets a preset condition. If yes, the target bias voltage of the receiving sensor is determined, and a switching signal is sent to the high-voltage amplifier to enable the high-voltage amplifier to output a positive voltage value of a corresponding gear; if no, the target bias voltage of the receiving sensor is determined, and a modulation signal is sent to the positive electrode of the power supply sub-circuit. The preset condition met by the temperature or the current of the receiving sensor refers to a sudden change in the temperature or the current. The temperature or the current of the receiving sensor detected by the detection sub-circuit at the current time may be compared with the previous detection result. If the difference value of the two detection results is greater than the threshold, the temperature or the current of the receiving sensor is considered to be suddenly changed; and if the difference value of the two detection results is smaller than or equal to the threshold, the temperature or the current of the receiving sensor is considered to have no sudden change. When the temperature or the current of the receiving sensor changes suddenly, it means that a large photocurrent is instantaneously generated, with the receiving sensor being irradiated by glare, a positive voltage value is instantaneously pulled to a low gear by controlling a high-voltage amplifier with quick response, the bias voltage of the receiving sensor is quickly adjusted to be low, and a strong echo signal can be effectively received while the device is prevented from being damaged. When the glare irradiation is finished, the temperature or the current of the receiving sensor is reduced, the positive voltage value is switched back to a high gear by controlling the high-voltage amplifier, and the normal working state is recovered. When the temperature or the current of the receiving sensor does not change suddenly, it means that the receiving sensor is in a normal working state, and a bias voltage does not need to be adjusted instantaneously and quickly. However, the temperature or current of the receiving sensor can also be changed due to slow temperature change caused by factors such as the working environmental temperature of the receiving sensor, the self temperature rise, and the device aging. At this situation, the bias voltage of the receiving sensor is adjusted to be in a good working state by sending modulation signals with different duty ratios to the positive electrode and/or the negative electrode of the power supply sub-circuit through the control sub-circuit, thus realizing the dynamic adjustment of the bias voltage during the working period of the receiving sensor, and improving the distance measurement range and the reliability of the LiDAR system.

In the embodiment of the present application, a first current signal output by a receiving sensor and a second current signal output by a reference sensor are acquired; a cancellation residue is determined based on the first current signal and the second current signal; whether glare noise exists in echo light is determined based on the cancellation residue; and a bias voltage at a receiving end of the LiDAR system is adjusted in a case that the glare noise exists in the echo light. Therefore, in the embodiment of the present application, whether glare noise exists in the echo light can be detected by arranging the receiving sensor and the reference sensor at the receiving end of the LiDAR system. If yes, the bias voltage at the receiving end is reduced to reduce the average current of the receiving sensor and reduce noise excitation, thus improving the ranging accuracy of the LiDAR system.

In some possible embodiments, the powers of the pulse laser beams emitted by the laser emitter in at least two adjacent detection periods are the same. Before the acquiring module 111, the apparatus further includes:
a first-time acquiring module, configured for acquiring times when the laser emitter emits the pulse laser beams in the at least two adjacent detection periods; and
the second determining module 113, configured for:
   acquiring rising times of the cancellation residues of the at least two adjacent detection periods when time intervals of the laser emitter emitting the pulse laser beams in the at least two adjacent detection periods are different, and determining that the glare noise exists in the echo light when the rising times of the cancellation residues of the at least two adjacent detection periods are the same.

In some possible embodiments, the emission powers of the pulse laser beams emitted by the laser emitter in at least two adjacent detection periods are different.

Before the acquiring module 111, the apparatus further includes:
a first-time acquiring module, configured for acquiring times when the laser emitter emits the pulse laser beams in the at least two adjacent detection periods; and
the second determining module 113, configured for:
   acquiring rising times of the cancellation residues of the at least two adjacent detection periods when time intervals of the laser emitter emitting the pulse laser beams in the at least two adjacent detection periods are the same, and determining that the glare noise exists in the echo light when the rising times of the cancellation residues of the at least two adjacent detection periods are different.

In some possible embodiments, before the acquiring module 111, the apparatus further includes:
a bias voltage control signal applying module, configured for turning off the laser emitter and applying a preset bias control signal to the receiving sensor and the reference sensor; where the preset bias control signal controls the bias voltage at the receiving end to be smaller than a breakdown voltage in a stray light time period, and controls the bias voltage at the receiving end to be greater than the breakdown voltage in an echo light time period.

In some embodiments, the adjusting module 114 includes:
a judging unit configured for determining whether glare noise exists in echo light of n continuous detection periods when the glare noise is detected to exist in the echo light; and
an adjusting unit configured for adjusting the bias voltage at the receiving end of the LiDAR system when the strong light noise exists in the echo light of the n continuous detection periods.

In some embodiments, the adjusting unit is configured for adjusting the bias voltage at the receiving end of the LiDAR system, based on a voltage reduction threshold, in m continuous detection periods.

In some embodiments, after the adjusting module 114, the apparatus further includes: a filter module configured for performing point cloud filtering on the glare noise.

It should be noted that, when the apparatus for improving the laser beam ranging capability of a LiDAR system according to the above embodiments implements the method for improving the laser beam ranging capability of a LiDAR system, only the division of the above functional modules is illustrated. In practical applications, the above function may be achieved by different functional modules as needed; that is, the internal structure of the device is divided into different functional modules to complete all or part of the above described functions. In addition, the apparatus for improving the laser beam ranging capability of a LiDAR system according to the above embodiments and the embodiment of the method for improving the laser beam ranging capability of a LiDAR system belong to the same concept, and the detailed implementation process thereof is shown in the method embodiments, which is not repeated herein.

The above serial numbers of the embodiments of the present application are merely for description, and do not represent the advantages and disadvantages of the embodiments.

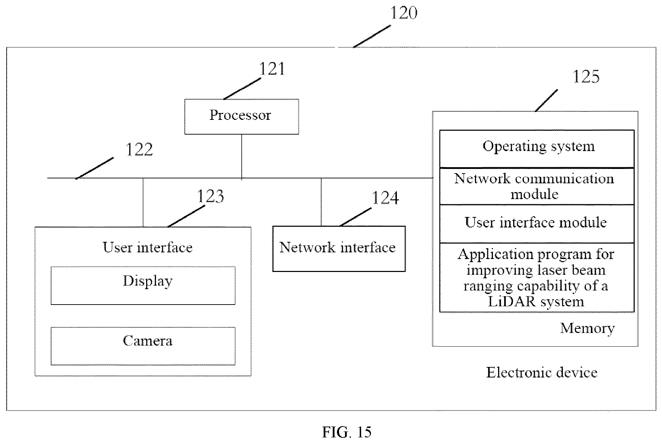

FIG.15 shows a schematic structural diagram of an electronic device according to an embodiment of the present application. As shown in FIG. 15, the electronic device 120 may include: at least one processor 121, at least one network interface 124, a user interface 123, a memory 125, and at least one communication bus 122.

The communication bus 122 is configured for implementing connection communication among these components.

The user interface 123 may include a display and a camera, and the optional user interface 123 may include a standard wired interface and a wireless interface.

The network interface 124 may include a standard wired interface and a wireless interface (e.g., WI-FI interface).

The processor 121 may include one or more processing cores. The processor 121 connects all parts of the entire electronic device 120 by utilizing various interfaces and circuits, implements various functions of the electronic device 120 and processes data by running or executing instructions, programs, code sets, or instruction sets stored in the memory 125 and by calling data stored in the memory 125. The processor 121 may be implemented in at least one hardware form of digital signal processing (DSP), field-programmable gate array (FPGA), and programmable logic array (PLA). The processor 121 may integrate one or a combination of a central processing unit (CPU), a graphics processing unit (GPU), a modem, or the like. The CPU mainly processes an operating system, a user interface, an application program, or the like. The GPU is configured for rendering and drawing the content required to be displayed by the display; the modem is configured for handling wireless communications. It can be understood that the above modem may not be integrated into the processor 121, and may be implemented by a single chip.

The memory 125 may include a random access memory (RAM) or a read-only memory (ROM). The memory 125 includes a non-transitory computer-readable storage medium. The memory 125 may be configured for storing an instruction, a program, a code, a code set, or an instruction set. The memory 125 may include a storage program area and a storage data area. The storage program area may store instructions for implementing an operating system, instructions for at least one function (such as a touch function, a sound playing function, and an image playing function), instructions for implementing the above method embodiments, or the like; the storage data area may store data and the like referred to in the above method embodiments. The memory 125 may also be at least one storage apparatus located remotely from the processor 121 described above. As shown in FIG. 15, the memory 125, as a computer storage medium, may include an operating system, a network communication module, a user interface module, and an application program for improving laser beam ranging capability of a LiDAR system.

In the electronic device 120 shown in FIG. 15, the user interface 123 is mainly configured as an interface for providing inputs for users and acquiring data input by users; the processor 121 may be configured for calling the application program for improving laser beam ranging capability of a LiDAR system stored in the memory 125, and the specific operations may be performed as follows:
acquiring a first current signal output by the receiving sensor and a second current signal output by the reference sensor;
determining a cancellation residue based on the first current signal and the second current signal;
determining whether glare noise exists in the echo light based on the cancellation residue; and
adjusting a bias voltage at the receiving end of the LiDAR system in a case that the strong light noise exists in the echo light.

In some embodiments, the powers of the pulse laser beams emitted by the laser emitter in at least two adjacent detection periods are the same. The processor 121, before implementing the step of acquiring a first current signal output by the receiving sensor and a second current signal output by the reference sensor, further implements:
acquiring times when the laser emitter emits the pulse laser beams in the at least two adjacent detection periods; and
the processor 121, when executing the step of determining whether glare noise exists in the echo light based on the cancellation residue, specifically executes:
   acquiring rising times of the cancellation residues of the at least two adjacent detection periods when time intervals of the laser emitter emitting the pulse laser beams in the at least two adjacent detection periods are different, and determining that the glare noise exists in the echo light when the rising times of the cancellation residues of the at least two adjacent detection periods are the same.

In some embodiments, the processor 121, before implementing the step of acquiring a first current signal output by the receiving sensor and a second current signal output by the reference sensor, further implements:
turning off the laser emitter; and
applying a preset bias control signal to the receiving sensor and the reference sensor, where the preset bias control signal controls the bias voltage at the receiving end to be smaller than a breakdown voltage in a stray light time period, and controls the bias voltage at the receiving end to be greater than the breakdown voltage in an echo light time period.

In some embodiments, the processor 121, when implementing the step of adjusting a bias voltage at the receiving end of the LiDAR system in a case that the glare noise exists in the echo light, implements:
determining whether glare noise exists in echo light of n continuous detection periods when the glare noise is detected to exist in the echo light; and
adjusting the bias voltage at the receiving end of the LiDAR system when the strong light noise exists in the echo light of the n continuous detection periods.

In some embodiments, the processor 121, when implementing the step of adjusting the bias voltage at the receiving end of the LiDAR system, implements:
adjusting the bias voltage of the receiving end of the LiDAR system, based on a voltage reduction threshold, in m continuous detection periods.

In some embodiments, the processor 121, after implementing the step of adjusting a bias voltage at the receiving end of the LiDAR system in a case that the strong light noise exists in the echo light, further implements: performing point cloud filtering on the glare noise.
The embodiment of the present application also provides a computer readable storage medium. The computer readable storage medium has an instruction stored thereon, where the instruction, when executed on a computer or a processor, causes the computer or the processor to implement one or more of the steps in the embodiments shown in FIGs. 4, 6, 8 and 10 as described above. The respective constituent modules of the apparatus for improving the laser beam ranging capability of a LiDAR system described above may be stored in the computer-readable storage medium if they are implemented in the form of software functional units and sold or used as independent products.

In the above embodiments, all or part of the implementation may be realized using software, hardware, firmware, or any combination thereof.

The implementation, when realized using software, may be realized in whole or in part in the form of a computer program product. The computer program product includes one or more computer instructions. The procedures or functions described in accordance with the embodiments of the present application are all or partially generated when the computer program instructions are loaded and executed on a computer. The computer may be a general-purpose computer, a special-purpose computer, a computer network, or other programmable apparatuses. The computer instructions may be stored on or transmitted over a computer-readable storage medium. The computer instructions may be transmitted from one website, computer, server, or data center to another website, computer, server or data center in a wired (e.g., coaxial cable, fiber optic, and digital subscriber line (DSL)) or wireless (e.g., infrared, wireless, and microwave) manner. The computer-readable storage medium may be any available medium that can be accessed by a computer or a data storage device, such as a server and a data center, that includes one or more available media. The available medium may be a magnetic medium (e.g., a soft disk, a hard disk, or a magnetic tape), an optical medium (e.g., a digital versatile disc (DVD)), or a semiconductor medium (e.g., a solid state disk (SSD)), and the like.

It can be understood by those of ordinary skill in the art that all or a part of the procedures of the methods in the embodiments described above may be implemented by a computer program instructing relevant hardware. The program may be stored in a computer-readable storage medium; and the program, when executed, may include the procedures in the embodiments of the methods described above. The aforementioned storage medium includes a read-only memory (ROM), a random access memory (RAM), a magnetic disk, an optical disk, or other media capable of storing program codes.

## Claims

1. A method for improving ranging capability of a LiDAR system, the LiDAR system comprising a laser emitter for emitting pulse laser beams, a receiving sensor for receiving echo light, and a reference sensor in a shading state, wherein the receiving sensor and the reference sensor are arranged at a receiving end of the LiDAR system, the method comprising:
acquiring times when the laser emitter emits the pulse laser beams in at least two adjacent detection periods;
acquiring a first current signal output by the receiving sensor and a second current signal output by the reference sensor (S401);
determining a cancellation residue based on the first current signal and the second current signal (S402);
**characterized in that** the method further comprises:
determining whether glare noise exists in the echo light based on the cancellation residue (S403); and
if the glare noise exists in the echo light, adjusting a bias voltage at the receiving end of the LiDAR system (S404),
wherein determining whether glare noise exists in the echo light based on the cancellation residue (S403) comprises at least one of the following conditions:
when powers of the pulse laser beams emitted by the laser emitter in the at least two adjacent detection periods are same, acquiring rising times of the cancellation residues of the at least two adjacent detection periods when time intervals of the laser emitter emitting the pulse laser beams in the at least two adjacent detection periods are different, and determining that the glare noise exists in the echo light when the rising times of the cancellation residues of the at least two adjacent detection periods are the same; or
when powers of the pulse laser beams emitted by the laser emitter in the at least two adjacent detection periods are different, acquiring rising times of the cancellation residues of the at least two adjacent detection periods when time intervals of the laser emitter emitting the pulse laser beams in the at least two adjacent detection periods are the same, and determining that the glare noise exists in the echo light when the rising times of the cancellation residues of the at least two adjacent detection periods are different.

2. The method according to claim 1, wherein before acquiring the first current signal output by the receiving sensor and the second current signal output by the reference sensor, the method further comprises:
turning off the laser emitter; and
applying a preset bias control signal to the receiving sensor and the reference sensor, wherein the preset bias control signal is configured to control the bias voltage of the receiving end to be smaller than a breakdown voltage in a stray light period and greater than the breakdown voltage in an echo light period.

3. The method according to claim 1, wherein adjusting the bias voltage at the receiving end of the LiDAR system comprises:
when the glare noise is detected to exist in the echo light, determining whether glare noise exists in echo light in n continuous detection periods; and
if the glare noise exists in the echo light in the n continuous detection periods, adjusting the bias voltage at the receiving end of the LiDAR system.

4. The method according to claim 1, wherein after adjusting the bias voltage at the receiving end of the LiDAR system, the method further comprises performing point cloud filtering on the glare noise.

5. An apparatus for improving ranging capability of a LiDAR system, the LiDAR system comprising a laser emitter for emitting pulse laser beams, a receiving sensor for receiving echo light, and a reference sensor in a shading state, wherein the receiving sensor and the reference sensor are positioned at a receiving end of the LiDAR system, the apparatus comprising:
a first-time acquiring module, configured for acquiring times when the laser emitter emits the pulse laser beams in at least two adjacent detection periods;
an acquiring module (111), configured for acquiring a first current signal output by the receiving sensor and a second current signal output by the reference sensor;
a first determining module (112), configured for determining a cancellation residue based on the first current signal and the second current signal;
**characterized in that** the apparatus further comprises:
a second determining module (113), configured for determining whether glare noise exists in the echo light based on the cancellation residue; and
an adjusting module (114), configured for adjusting a bias voltage at the receiving end of the LiDAR system in a case that the glare noise exists in the echo light,
wherein the second determining module (113) further configured for performing at least one of the following:
acquiring rising times of the cancellation residues of the at least two adjacent detection periods when time intervals of the laser emitter emitting the pulse laser beams in the at least two adjacent detection periods are different, and determining that the glare noise exists in the echo light when the rising times of the cancellation residues of the at least two adjacent detection periods are the same; or
acquiring rising times of the cancellation residues of the at least two adjacent detection periods when time intervals of the laser emitter emitting the pulse laser beams in the at least two adjacent detection periods are the same, and determining that the glare noise exists in the echo light when the rising times of the cancellation residues of the at least two adjacent detection periods are different.

6. A computer-readable storage medium having stored thereon instructions which, when loaded and executed by an apparatus according to claim 5, result in performance of the method according to any one of claims 1 to 4.

## Patentansprüche

1. Verfahren zur Verbesserung der Entfernungsmessfähigkeit eines LiDAR-Systems, wobei das LiDAR-System einen Laseremitter zum Emittieren von gepulsten Laserstrahlen, einen Empfangssensor zum Empfangen von Echolicht und einen Referenzsensor in einem Abschattungszustand umfasst, wobei der Empfangssensor und der Referenzsensor an einem Empfangsende des LiDAR-Systems angeordnet sind, wobei das Verfahren Folgendes umfasst:
Erfassen von Zeiten, zu denen der Laseremitter die gepulsten Laserstrahlen in mindestens zwei benachbarten Erfassungszeiträumen emittiert;
Erfassen eines ersten Stromsignals, das von dem Empfangssensor ausgegeben wird, und eines zweiten Stromsignals, das von dem Referenzsensor ausgegeben wird (S401);
Bestimmen eines Kompensationsrests basierend auf dem ersten Stromsignal und dem zweiten Stromsignal (S402); **dadurch gekennzeichnet, dass** das Verfahren ferner Folgendes umfasst:
Bestimmen, basierend auf dem Kompensationsrest, ob ein Blendungsrauschen in dem Echolicht existiert (S403); und
falls das Blendungsrauschen in dem Echolicht existiert, Anpassen einer Vorspannung an dem Empfangsende des LiDAR-Systems (S404),
wobei das Bestimmen, basierend auf dem Kompensationsrest, ob ein Blendungsrauschen in dem Echolicht existiert (S403), mindestens eine der folgenden Bedingungen umfasst:
wenn Leistungen der von dem Laseremitter in den mindestens zwei benachbarten Erfassungszeiträumen emittierten gepulsten Laserstrahlen gleich sind, Erfassen von Anstiegszeiten der Kompensationsreste der mindestens zwei benachbarten Erfassungszeiträume, wenn Zeitintervalle der Emission der gepulsten Laserstrahlen durch den Laseremitter in den mindestens zwei benachbarten Erfassungszeiträumen verschieden sind, und Bestimmen, dass das Blendungsrauschen in dem Echolicht existiert, wenn die Anstiegszeiten der Kompensationsreste der mindestens zwei benachbarten Erfassungszeiträume gleich sind; oder
wenn Leistungen der von dem Laseremitter in den mindestens zwei benachbarten Erfassungszeiträumen emittierten gepulsten Laserstrahlen verschieden sind, Erfassen von Anstiegszeiten der Kompensationsreste der mindestens zwei benachbarten Erfassungszeiträume, wenn Zeitintervalle der Emission der gepulsten Laserstrahlen durch den Laseremitter in den mindestens zwei benachbarten Erfassungszeiträumen gleich sind, und Bestimmen, dass das Blendungsrauschen in dem Echolicht existiert, wenn die Anstiegszeiten der Kompensationsreste der mindestens zwei benachbarten Erfassungszeiträume verschieden sind.

2. Verfahren nach Anspruch 1, wobei das Verfahren vor dem Erfassen des ersten Stromsignals, das von dem Empfangssensor ausgegeben wird, und des zweiten Stromsignals, das von dem Referenzsensor ausgegeben wird, ferner Folgendes umfasst:
Ausschalten des Laseremitters; und
Anlegen eines voreingestellten Vorspannungssteuersignal an den Empfangssensor und den Referenzsensor, wobei das voreingestellte Vorspannungssteuersignal dazu konfiguriert ist, die Vorspannung des Empfangsendes so zu steuern, dass sie in einem Streulichtzeitraum kleiner als eine Durchbruchspannung und in einem Echolichtzeitraum größer als die Durchbruchspannung ist.

3. Verfahren nach Anspruch 1, wobei das Anpassen der Vorspannung an dem Empfangsende des LiDAR-Systems Folgendes umfasst:
wenn detektiert wird, dass das Blendungsrauschen in dem Echolicht existiert, Bestimmen, ob ein Blendungsrauschen in einem Echolicht in n aufeinanderfolgenden Erfassungszeiträumen existiert; und
falls das Blendungsrauschen in dem Echolicht in den n aufeinanderfolgenden Erfassungszeiträumen existiert, Anpassen der Vorspannung an dem Empfangsende des LiDAR-Systems.

4. Verfahren nach Anspruch 1, wobei das Verfahren nach dem Anpassen der Vorspannung an dem Empfangsende des LiDAR-Systems ferner das Durchführen einer Punktwolkenfilterung bezüglich des Blendungsrauschens umfasst.

5. Vorrichtung zur Verbesserung der Entfernungsmessfähigkeit eines LiDAR-Systems, wobei das LiDAR-System einen Laseremitter zum Emittieren von gepulsten Laserstrahlen, einen Empfangssensor zum Empfangen von Echolicht und einen Referenzsensor in einem Abschattungszustand umfasst, wobei der Empfangssensor und der Referenzsensor an einem Empfangsende des LiDAR-Systems positioniert sind, wobei die Vorrichtung Folgendes umfasst:
erstes Zeiterfassungsmodul, das zum Erfassen von Zeiten konfiguriert ist, zu denen der Laseremitter die gepulsten Laserstrahlen in mindestens zwei benachbarten Erfassungszeiträumen emittiert;
ein Erfassungsmodul (111), das zum Erfassen eines ersten Stromsignals, das von dem Empfangssensor ausgegeben wird, und eines zweiten Stromsignals, das von dem Referenzsensor ausgegeben wird, konfiguriert ist;
ein erstes Bestimmungsmodul (112), das zum Bestimmen eines Kompensationsrests basierend auf dem ersten Stromsignal und dem zweiten Stromsignal konfiguriert ist; **dadurch gekennzeichnet, dass** die Vorrichtung ferner Folgendes umfasst:
ein zweites Bestimmungsmodul (113), das zum Bestimmen, basierend auf dem Kompensationsrest, ob ein Blendungsrauschen in dem Echolicht existiert, konfiguriert ist; und
ein Anpassungsmodul (114), das zum Anpassen einer Vorspannung an dem Empfangsende des LiDAR-Systems konfiguriert ist, falls das Blendungsrauschen in dem Echolicht existiert, wobei das zweite Bestimmungsmodul (113) ferner zum Ausführen mindestens eines der Folgenden konfiguriert ist:
Erfassen von Anstiegszeiten der Kompensationsreste der mindestens zwei benachbarten Erfassungszeiträume, wenn Zeitintervalle der Emission der gepulsten Laserstrahlen durch den Laseremitter in den mindestens zwei benachbarten Erfassungszeiträumen verschieden sind, und Bestimmen, dass das Blendungsrauschen in dem Echolicht existiert, wenn die Anstiegszeiten der Kompensationsreste der mindestens zwei benachbarten Erfassungszeiträume gleich sind; oder
Erfassen von Anstiegszeiten der Kompensationsreste der mindestens zwei benachbarten Erfassungszeiträume, wenn Zeitintervalle der Emission der gepulsten Laserstrahlen durch den Laseremitter in den mindestens zwei benachbarten Erfassungszeiträumen gleich sind, und Bestimmen, dass das Blendungsrauschen in dem Echolicht existiert, wenn die Anstiegszeiten der Kompensationsreste der mindestens zwei benachbarten Erfassungszeiträume verschieden sind.

6. Computerlesbares Speichermedium, auf dem Anweisungen gespeichert sind, die, wenn sie von einer Vorrichtung nach Anspruch 5 geladen und ausgeführt werden, zur Durchführung des Verfahrens nach einem der Ansprüche 1 bis 4 führen.

## Revendications

1. Procédé d'amélioration de la capacité de télémétrie d'un système LiDAR, le système LiDAR comprenant un émetteur laser pour émettre des faisceaux laser pulsés, un capteur de réception pour recevoir une lumière d'écho, et un capteur de référence dans un état d'occultation, dans lequel le capteur de réception et le capteur de référence sont disposés au niveau d'une extrémité de réception du système LiDAR, le procédé comprenant :
l'acquisition des instants où l'émetteur laser émet les faisceaux laser pulsés dans au moins deux périodes de détection adjacentes ;
l'acquisition d'un premier signal de courant délivré en sortie par le capteur de réception et d'un second signal de courant délivré en sortie par le capteur de référence (S401) ;
la détermination d'un résidu d'annulation sur la base du premier signal de courant et du second signal de courant (S402) ;
**caractérisé en ce que** le procédé comprend en outre :
le fait de déterminer si un bruit d'éblouissement existe dans la lumière d'écho sur la base du résidu d'annulation (S403) ; et
si le bruit d'éblouissement existe dans la lumière d'écho, l'ajustement d'une tension de polarisation au niveau de l'extrémité de réception du système LiDAR (S404),
dans lequel la détermination du fait qu'un bruit d'éblouissement existe ou non dans la lumière d'écho sur la base du résidu d'annulation (S403) comprend au moins l'une des conditions suivantes :
lorsque les puissances des faisceaux laser pulsés émis par l'émetteur laser dans les au moins deux périodes de détection adjacentes sont identiques, l'acquisition des temps de montée des résidus d'annulation des au moins deux périodes de détection adjacentes lorsque les intervalles de temps d'émission des faisceaux laser pulsés par l'émetteur laser dans les au moins deux périodes de détection adjacentes sont différents, et la détermination du fait que le bruit d'éblouissement existe dans la lumière d'écho lorsque les temps de montée des résidus d'annulation des au moins deux périodes de détection adjacentes sont identiques ; ou
lorsque les puissances des faisceaux laser pulsés émis par l'émetteur laser dans les au moins deux périodes de détection adjacentes sont différentes, l'acquisition des temps de montée des résidus d'annulation des au moins deux périodes de détection adjacentes lorsque les intervalles de temps d'émission des faisceaux laser pulsés par l'émetteur laser dans les au moins deux périodes de détection adjacentes sont identiques, et la détermination du fait que le bruit d'éblouissement existe dans la lumière d'écho lorsque les temps de montée des résidus d'annulation des au moins deux périodes de détection adjacentes sont différents.

2. Procédé selon la revendication 1, dans lequel, avant l'acquisition du premier signal de courant délivré en sortie par le capteur de réception et du second signal de courant délivré en sortie par le capteur de référence, le procédé comprend en outre :
la mise hors tension de l'émetteur laser ; et
l'application d'un signal de commande de polarisation prédéfini au capteur de réception et au capteur de référence, dans lequel le signal de commande de polarisation prédéfini est configuré pour commander la tension de polarisation de l'extrémité de réception afin qu'elle soit inférieure à une tension de claquage dans une période de lumière parasite et supérieure à la tension de claquage dans une période de lumière d'écho.

3. Procédé selon la revendication 1, dans lequel l'ajustement de la tension de polarisation au niveau de l'extrémité de réception du système LiDAR comprend :
lorsque le bruit d'éblouissement est détecté comme existant dans la lumière d'écho, le fait de déterminer si un bruit d'éblouissement existe dans la lumière d'écho dans n périodes de détection continues ; et
si le bruit d'éblouissement existe dans la lumière d'écho dans les n périodes de détection continues, l'ajustement de la tension de polarisation au niveau de l'extrémité de réception du système LiDAR.

4. Procédé selon la revendication 1, dans lequel, après l'ajustement de la tension de polarisation au niveau de l'extrémité de réception du système LiDAR, le procédé comprend en outre l'exécution d'un filtrage de nuage de points sur le bruit d'éblouissement.

5. Appareil d'amélioration de la capacité de télémétrie d'un système LiDAR, le système LiDAR comprenant un émetteur laser pour émettre des faisceaux laser pulsés, un capteur de réception pour recevoir une lumière d'écho, et un capteur de référence dans un état d'occultation, dans lequel le capteur de réception et le capteur de référence sont positionnés au niveau d'une extrémité de réception du système LiDAR, l'appareil comprenant :
un premier module d'acquisition de temps, configuré pour acquérir les instants où l'émetteur laser émet les faisceaux laser pulsés dans au moins deux périodes de détection adjacentes ;
un module d'acquisition (111), configuré pour acquérir un premier signal de courant délivré en sortie par le capteur de réception et un second signal de courant délivré en sortie par le capteur de référence ;
un premier module de détermination (112), configuré pour déterminer un résidu d'annulation sur la base du premier signal de courant et du second signal de courant ;
**caractérisé en ce que** l'appareil comprend en outre :
un second module de détermination (113), configuré pour déterminer si un bruit d'éblouissement existe dans la lumière d'écho sur la base du résidu d'annulation ; et
un module d'ajustement (114), configuré pour ajuster une tension de polarisation au niveau de l'extrémité de réception du système LiDAR dans le cas où le bruit d'éblouissement existe dans la lumière d'écho,
dans lequel le second module de détermination (113) est en outre configuré pour effectuer au moins l'une des étapes suivantes :
acquérir les temps de montée des résidus d'annulation des au moins deux périodes de détection adjacentes lorsque les intervalles de temps d'émission des faisceaux laser pulsés par l'émetteur laser dans les au moins deux périodes de détection adjacentes sont différents, et déterminer que le bruit d'éblouissement existe dans la lumière d'écho lorsque les temps de montée des résidus d'annulation des au moins deux périodes de détection adjacentes sont identiques ; ou
acquérir les temps de montée des résidus d'annulation des au moins deux périodes de détection adjacentes lorsque les intervalles de temps d'émission des faisceaux laser pulsés par l'émetteur laser dans les au moins deux périodes de détection adjacentes sont identiques, et déterminer que le bruit d'éblouissement existe dans la lumière d'écho lorsque les temps de montée des résidus d'annulation des au moins deux périodes de détection adjacentes sont différents.

6. Support de stockage lisible par ordinateur sur lequel sont stockées des instructions qui, lorsqu'elles sont chargées et exécutées par un appareil selon la revendication 5, entraînent l'exécution du procédé selon l'une quelconque des revendications 1 à 4.
